# EUROPEAN PATENT SPECIFICATION

(11) **EP 2 366 931 B1**
(45) Date of publication and mention of the grant of the patent: **17.09.2014**
(21) Application number: 11155683.3
(22) Date of filing: 23.02.2011
(51) Int. Cl.: F16L 27/02, F16L 27/10, F16L 27/11

(54) **Quick-coupling connector, particularly for fluidic service circuits for aircraft**
Schnellkupplung, insbesondere für fluidische Serviceleitungen eines Flugzeugs
Raccord rapide, en particulier pour circuits de service fluidiques pour avion

(30) Priority: 05.03.2010 IT MI20100362
(43) Date of publication of application: 21.09.2011
(73) Proprietor: F.I.M.A.C. Fabbrica Italiana Macchine Aria Compressa S.p.A., I-20030 Senago (Milano) (IT)
(72) Inventor: Scalera, Attilio, 16167 Genova (IT)
(74) Representative: Modiano, Micaela Nadia

(56) References cited:
- EP-A2- 2 138 749
- WO-A1-2006/125666
- GB-A- 862 650
- US-A1- 2004 032 123

## Description

The present invention relates to a quick-coupling connector, particularly for fluidic service circuits for aircraft.

As is known, aircraft are provided with numerous fluidic circuits for operating service devices.

In order to achieve the connection of such circuits to components or devices that need to be disconnected from the remainder of the circuit, snap-fit connectors are used of the male-female type.

In many cases, one of the two elements that make up the connector is mounted on a support element which can be removably engaged with the part of the aircraft that bears the other element of the connector. Usually, the support element can be slidingly coupled with a seat defined in the part of the aircraft and the two elements that make up the connector are generally arranged on the head of the support element and on the bottom of the seat in such a way that, at the end of the insertion of the support element in the seat, the coupling between the two elements that constitute the connector is achieved.

Obtaining a correct coupling between the male element and the female element that make up the connector is of fundamental importance to the functioning of the apparatuses that are served by the fluidic circuit, because any leaks at the connector could cause a malfunctioning or even a failure of the apparatus. For example, if the connector is located on a circuit for cooling components of the aircraft, even small leaks which are due to an imperfect coupling between the two elements that make up the connector could lead to the progressive emptying of the circuit, with the consequence of cooling failure and hence the overheating of the components that should be cooled. An eventuality of this type must be prevented with a high level of certainty since, if it occurred, it could have potentially tragic consequences for the people on board the aircraft.

For this reason, when making connectors of this type, there is a requirement to securely obtain a correct coupling between the male element and the female element that make up the connector. This requirement is difficult to meet because, very often, the correct coupling between the two elements that make up the connector also depends on the correct coupling between the support element that bears one of the two elements of the connector and the seat on the bottom of which the other element of the connector is arranged, and a support element can simultaneously carry female elements or male elements of a plurality of connectors which need to be coupled with corresponding male or female elements that are connected on the bottom of the seat in which the support element slidingly couples.

Moreover, it must be kept in mind that the coupling between the two elements of the connector or connectors is generally done "blind", i.e. the coupling between the support element and the seat precludes the technician from seeing, and thus verifying, the correct coupling between the two elements that make up each connector.

Therefore, in the connectors currently on the market, which are made up of a male element and a female element which are provided with a rigid body and are fixed respectively to a part of the aircraft and to a support element that can be engaged with such part of the aircraft or vice versa, the machining and assembly tolerances are extremely narrow in order to reduce as far as possible the extent of any misalignments between the two elements of the connector which would obstruct their correct coupling.

Furthermore, also for this reason, narrow machining and coupling tolerances are also required for the support element and for the seat which is designed to receive the support element.

The high level of precision required for these elements is the cause of high production costs.

Moreover, conventional connectors, precisely because of the critical nature of the coupling, require frequent checks on the system in order to rapidly identify any leaks.

EP 2 138 749 A2 discloses a joint for mutually connecting two portions of a duct. The joint includes two rectilinear portions each of which is provided at a free end thereof with an annular seat housing an O-ring sealing member, for sealing connection inside a respective duct portion. The two rectilinear portions are mutually connected, at their ends opposite to the respective free end, by means of a bellows element welded thereat.

US 2004/032123 A1 discloses an angle-adjustable connector comprising a first coupling member connectable to a quick-release lock of a tool, a second coupling member connectable to a delivery tube, a connecting tube connected between the first and second coupling members by means of spherical end portions of the tube, and a bellows sleeve surrounding the connecting tube and interconnected between ends of the first and second coupling members.

GB 862 650 A discloses a pipe coupling comprising a tubular fitting provided with two tubular parts and a central metallic pipe element clamped by bolts between the two tubular parts. A sheath of resilient material is provided on the pipe element and such sheath is compressed between the outer faces of the tubular parts to form a seal.

Document WO 2006/125666 A1 discloses a connector for an articulated connection of a first and second pipeline.

The aim of the present invention is to solve the above mentioned problems, by providing a quick-coupling connector, particularly for fluidic service circuits for aircraft, which is capable of compensating for any misalignments between its two elements to be coupled in such a way as to obtain a correct coupling with machining and assembly tolerances that are appreciably wider than those required by connectors of the known type.

Within this aim, an object of the invention is to provide a connector that is capable of increasing the certainty of obtaining a correct coupling between the two elements that make up the connector.

Another object of the invention is to provide a connector which, by requiring wider tolerances, can be produced at low cost.

A further object of the invention is to provide a connector that is extremely simple to assemble.

In accordance with the invention, there is provided a quick-coupling connector as defined in the appended claims.

Further characteristics and advantages of the invention will become better apparent from the description of a preferred, but not exclusive, embodiment of the connector according to the invention, illustrated, by way of non-limiting example, in the accompanying drawings wherein:

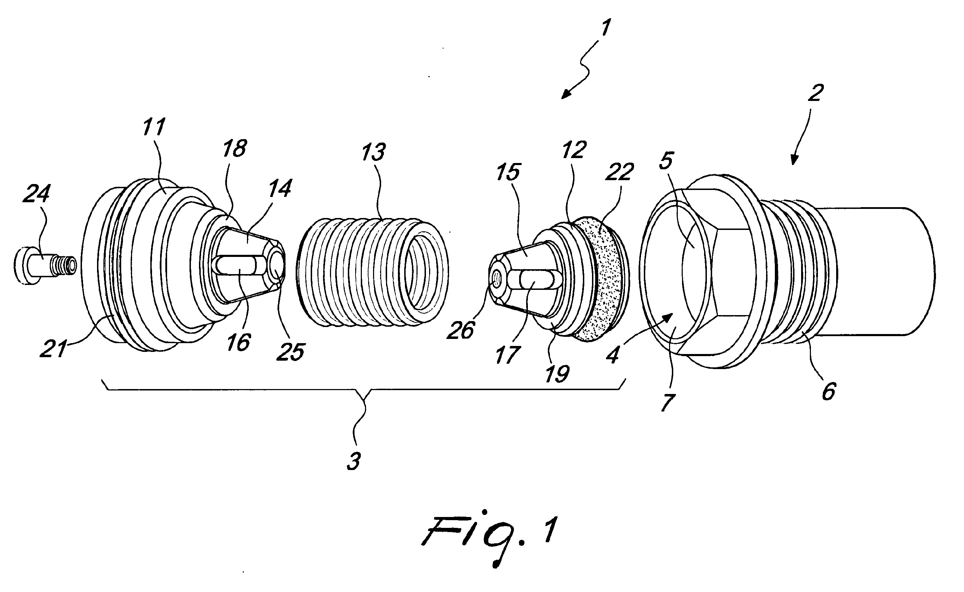

Figure 1 is a perspective view of the connector according to the invention, with the components of the male element exploded;

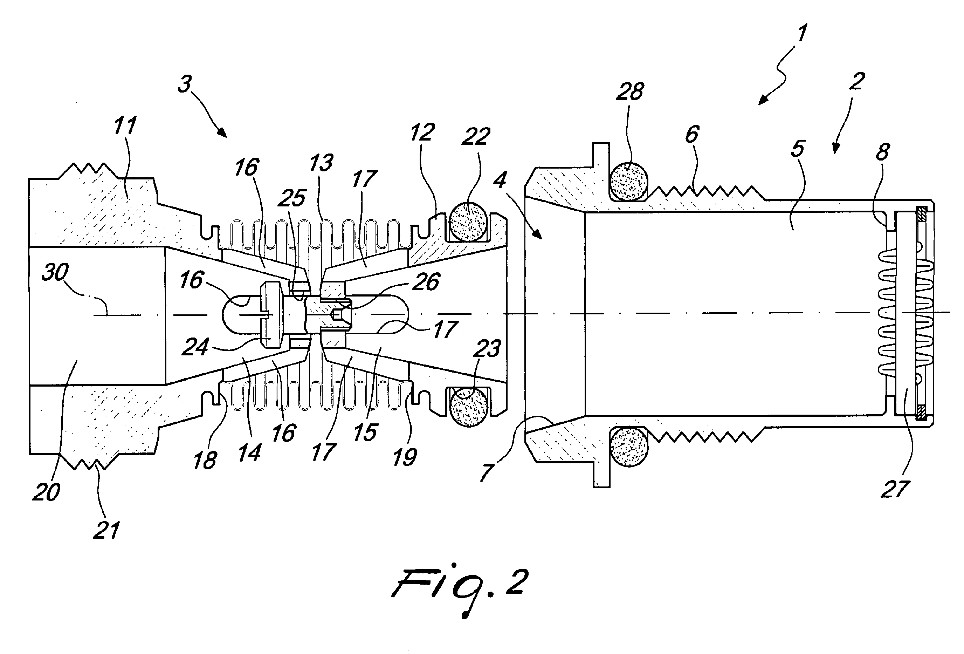

Figure 2 is an axial cross-sectional view of the connector according to the invention, with the male element assembled and before coupling with the female element;

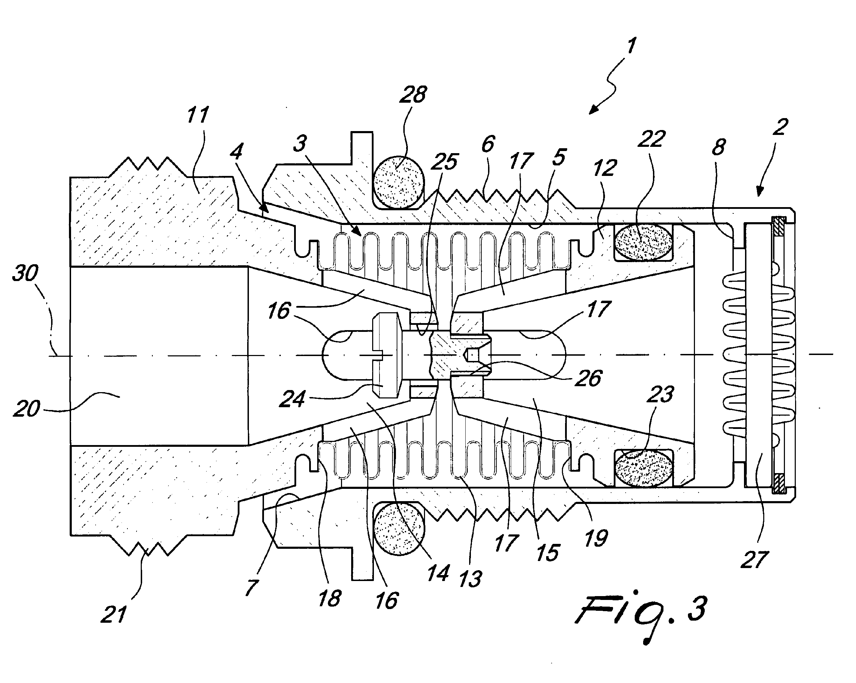

Figure 3 is an axial cross-sectional view of the connector according to the invention, with the male element coupled with the female element.

With reference to the figures, the connector according to the invention, generally designated with the reference numeral 1, comprises a female element 2, to be connected to a first duct of a fluidic circuit, and a male element 3, to be connected to a second duct of a fluidic circuit to be connected, by means of the connector 1, to the first duct of the fluidic circuit.

The female element 2, which preferably is substantially cylindrical, is crossed by an axial passage 4, a part of which is provided as the axial seat 5 in which a portion of the male element 3 is designed to couple, as will become better apparent hereinafter. On the outer lateral surface of the female element 2, a threaded portion 6 is defined which can be engaged with the first duct of a fluidic circuit so as to integrally connect the female element 2 to that first duct of the circuit.

The seat 5 has an inlet 7, through which a portion of the male element 3 is insertable in the seat 5, and a bottom 8, crossed by the axial passage 4.

According to the invention, the male element 3 comprises a first component 11 to be connected to the second duct of the fluidic circuit and a second component 12 which is insertable in the seat 5 of the female element 2. The second component 12 is articulated to the first component 11 in such a way as to allow the variation of the arrangement of the second component 12 relative to the first component 11 of the male element 3 in order to adapt that arrangement to the arrangement of the seat 5 of the female element 2.

Preferably, the second component 12 is articulated to the first component 11 by a deformable intermediate component which is interposed between the first component 11 and the second component 12.

Such deformable intermediate component is preferably constituted by a tubular bellows element 13, preferably made of metal, which connects the first component 11 to the second component 12 of the male element 3.

More specifically, the first component 11, which is made preferably of steel, has an end portion 14 which is frustum-shaped and is inserted in an axial end of the tubular bellows element 13 with its smaller end face directed toward the second component 12. The second component 12, which is also made preferably of steel, has an end portion 15 which is inserted in the other axial end of the tubular bellows element 13 with its smaller end face directed toward the first component 11.

The frustum-shaped end portions 14 and 15 of the first component 11 and of the second component 12 are hollow and provided with passages 16, 17 on their outer lateral surface in order to allow the passage of the fluid. Such end portions have, on their outer lateral surface, in a region that is distanced from the corresponding smaller end face, a flanging 18, 19 against which the corresponding axial end of the tubular bellows element 13 rests and is welded.

The cavity defined in the end portion 14 of the first component 11 constitutes the end portion of an axial duct 20 that crosses the first component 11, while the cavity defined in the end portion 15 of the second component 12 is open on the opposite end with respect to the first component 11 in order to allow the passage of the fluid through the male element 3.

The portion of the first component 11 which is situated outside the tubular bellows element 13 has a threaded portion 21 which can be engaged, in a way that is known per se, with the second duct of the fluidic circuit to be connected to the first duct to which the female element 2 is connected, as explained previously.

Advantageously, in the absence of forces acting on the male element 3, the first component 11, the tubular bellows element 13 and the second component 12 are coaxial with each other.

Conveniently, the second component 12, which is insertable in the seat 5 of the female element 2, is provided with sealing means which can be engaged with the lateral walls of the seat 5.

Such sealing means comprise an O-ring 22 which is accommodated in an annular groove 23, defined on the outer lateral surface of that portion of the second component 12 which is located externally to the tubular bellows element 13, and which can be engaged with the side walls of the seat 5, which is substantially cylindrical, defined in the female element 2.

Advantageously, in order to avoid stressing the tubular bellows element 13 excessively, means for limiting the deformability of the tubular bellows element 13 are provided.

Such means for limiting the deformability of the tubular bellows element 13 comprise a screw 24 which passes with play through a hole 25 defined in the smaller end face of the frustum-shaped end portion 14 of the first component 11 and which engages with a threaded hole 26 defined in the smaller end face of the frustum-shaped end portion 15 of the second component 12. The screw 24 defines, with its head, an axial shoulder that delimits the axial spacing of the first component 11 from the second component 12.

Moreover, the coupling with play of the shaft of the screw 24 with the hole 25 makes it possible, while limiting the width of the angle, to incline, in any direction around the axis 30 of the first component 11, the second component 12 relative to the first component 11 so as to adapt, without problems and with a wide margin of tolerance, the position of the second component 12 relative to the seat 5 of the female element 2.

Moreover, the inlet 7 of the seat 5 is conveniently conical so as to favour the insertion of the second component 12 of the male element 3 in the seat 5.

Preferably, in proximity to the bottom of the seat 5, along the axial passage 4 that crosses that bottom 8, a filter 27 is provided.

To complete the description, around the female element 2 a gasket is provided, for example an O-ring 28.

Use of the connector according to the invention is the following.

The female element 2, using the threaded portion 6, is fixed to a first duct of a fluidic circuit, while the male element 3 is fixed, by means of the threaded portion 21 of the first component 11, to a second duct of a fluidic circuit to be connected to the first duct.

For example, a male element 3 can be fixed to the bottom of a seat defined in a part of an aircraft, while the female element 2 can be fixed to a support element which is designed to be inserted, so that it can slide, in that seat. Obviously, it is also possible for the female element 2 to be fixed to the part of the aircraft, on the bottom of a seat for the purpose, while the male element 3 is fixed to a support element that can be inserted, so that it can slide, in such seat so as to activate the coupling between the male element 3 and the female element 2, as will become better apparent hereinafter.

In order to activate the connection between the first duct and the second duct of the fluidic circuit, it is sufficient for the male element 3 to be facing toward the inlet 7 of the seat 5 even if it is not perfectly aligned.

By pushing the male element 3 towards the female element 2 or vice versa, the progressive insertion is caused of the male element 3 in the seat 5 of the female element 2. This can be obtained, for example by inserting the support element in the seat specially provided in the part of the aircraft.

It should be noted that, if the second component 12 of the male element 3 should not be in perfect coaxiality with the seat 5, the inlet 7 of the seat 5 corrects any misalignment thanks to the fact that the second component 12 can modify its arrangement relative to the first component 11 thanks to the deformability of the tubular bellows element 13.

In this way it is certain, even if it is not possible to intervene directly and under conditions where the coupling cannot be visually verified, that the male element 3 couples perfectly with the seat 5 of the female element 2.

The screw 24 prevents excessive deformations and/or damage from occurring to the tubular bellows element 13, during the insertion or during the extraction of the male element 3.

It should be noted that the connector according to the invention, as well as making wide tolerances possible in the coaxiality between the male element 3 and the female element 2 in the coupling step, also ensures a wide tolerance in the axial direction and therefore also for the axial dimensions of the male element 3 and/or of the female element 2.

In practice it has been observed that the connector according to the invention fully achieves the intended aim and objects in that it is capable of compensating for any misalignments between the male element and the female element by permitting machining and assembly tolerances that are appreciably wider than those required by connectors of the known type.

The less critical nature of the connector, in terms of the precision of production and assembly, makes it possible to keep production costs low and to raise the level of certainty of obtaining a correct coupling between the male element and the female element.

The connector, thus conceived, is susceptible of numerous modifications and variations, all of which are within the scope of the appended claims. Moreover, all the details may be substituted by other, technically equivalent elements.

In practice, the materials employed, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A quick-coupling connector, particularly for fluidic service circuits for aircraft, comprising a female element (2), to be connected to a first duct of a fluidic circuit and having an axially extending substantially cylindrical seat (5) defined therein, and a male element (3), to be connected to a second duct of a fluidic circuit and matable with said seat (5) for connecting said second duct to said first duct, said male element (3) comprising a first component (11) to be connected to said second duct and a second component (12) insertable in said seat (5) of the female element (2), said second component (12) being articulated to said first component (11) to vary the arrangement of said second component (12) relative to said first component (11) of the male element (3) and adapt said arrangement to the arrangement of said seat (5) of the female element (2),
- said second component (12) being articulated to said first component (11) by a deformable intermediate component (13), interposed between said first component (11) and said second component (12), and constituted by a tubular bellows element (13), which connects said first component (11) to said second component (12) ;
- said first component (11) having an end portion (14) which is frustum-shaped and is inserted in an axial end of said tubular bellows element (13) with its smaller end face directed toward said second component (12);
- said second component (12) having an end portion (15) which is frustum-shaped and is inserted in the other axial end of said tubular bellows element (13) with its smaller end face directed toward said first component (11);
- said frustum-shaped end portions (14,15) of the first component (11) and of the second component (12) being hollow and provided with passages (16, 17) on their lateral surfaces for the passage of the fluid;
- means for limiting the deformability of said tubular bellows element (13) being provided, which comprise a screw (24) which passes with play through a hole (25) defined in the smaller end face of said frustum-shaped end portion (14) of the first component (11) and engages a threaded hole (26) defined in the smaller end face of said frustum-shaped end portion (15) of the second component (12), said screw (24) defining a delimiting axial shoulder for axially spacing said first component (11) from said second component (12).

2. The connector according to 1, **characterized in that** said tubular bellows element (13) is welded, by its axial ends, respectively to said first component (11) and to said second component (12).

3. The connector according to one or more of the preceding claims, **characterized in that** said first component (11), said second component (12) and said tubular bellows element (13), in the absence of applied forces, are mutually coaxial.

4. The connector according to one or more of the preceding claims, **characterized in that** said second component (12) is provided with sealing means (22) engageable with the walls of said seat (5) of the female element (2).

5. The connector according to one or more of the preceding claims, **characterized in that** said seat (5) has a conical inlet (7).

6. The connector according to claim 4, **characterized in that** said sealing means comprise an O-Ring (22) accommodated in an annular groove (23) defined on the outer lateral surface of the portion of said second component (12) located externally to said tubular bellows element (13) and engageable with the side walls of said substantially cylindrical seat (5) of the female element (2).

7. The connector according to one or more of the preceding claims, **characterized in that** the bottom (8) of said seat (5) is crossed by an axial passage (4) for the fluid, proximate to the bottom of said seat (5), along said axial passage (4), a filter (27) being provided .

8. The connector according to one or more of the preceding claims, **characterized in that** said first component (11) of the male element (3) and/or said female element (2) have threaded portions (21, 6) engageable with the ducts to be mutually connected by means of the connector (1).

## Patentansprüche

1. Eine Schnellkupplung, insbesondere für Fluid-Servicekreisläufe für ein Flugzeug, die ein weibliches Element (2) umfasst, das mit einer ersten Leitung eines Fluid-Kreislaufs verbunden werden soll und in dem ein sich axial erstreckender, im Wesentlichen zylindrischer Sitz (5) bestimmt ist, und ein männliches Element (3), das mit einer zweiten Leitung eines Fluid-Kreislaufs verbunden werden soll und zur Verbindung der zweiten Leitung mit der ersten Leitung mit dem Sitz (5) gekoppelt werden kann, wobei das männliche Element (3) eine erste Komponente (11) umfasst, die mit der zweiten Leitung verbunden werden soll, und eine zweite Komponente (12), die in den Sitz (5) des weiblichen Elements (2) einsetzbar ist, wobei die zweite Komponente (12) gelenkig mit der ersten Komponente (11) verbunden ist, um die Anordnung der zweiten Komponente (12) relativ zu der ersten Komponente (11) des männlichen Elements (3) zu variieren und die Anordnung an die Anordnung des Sitzes (5) des weiblichen Elements (2) anzupassen,
- wobei die zweite Komponente (12) mit der ersten Komponente (11) durch eine verformbare Zwischenkomponente (13) gelenkig verbunden ist, die zwischen der ersten Komponente (11) und der zweiten Komponente (12) angeordnet ist und aus einem rohrförmigen Balgelement (13) besteht, das die erste Komponente (11) mit der zweiten Komponente (12) verbindet;
- wobei die erste Komponente (11) einen Endabschnitt (14) hat, der kegelstumpfförmig ist und in ein axiales Ende des rohrförmigen Balgelements (13) eingesetzt wird, wobei seine kleinere Stirnfläche zu der zweiten Komponente (12) hin gerichtet ist;
- wobei die zweite Komponente (12) einen Endabschnitt (15) hat, der kegelstumpfförmig ist und in das andere axiale Ende des rohrförmigen Balgelements (13) eingesetzt wird, wobei seine kleinere Stirnfläche zu der ersten Komponente (11) hin gerichtet ist;
- wobei die kegelstumpfförmigen Endabschnitte (14, 15) der ersten Komponente (11) und der zweiten Komponente (12) hohl und an ihren Seitenflächen mit Durchgängen (16, 17) für das Hindurchströmen des Fluids ausgestattet sind;
- wobei Mittel zur Begrenzung der Verformbarkeit des rohrförmigen Balgelements (13) bereitgestellt sind, die eine Schraube (24) umfassen, welche mit Spiel durch ein Loch (25) passt, das in der kleineren Stirnfläche des kegelstumpfförmigen Endabschnitts (14) der ersten Komponente (11) geformt ist, und in eine Gewindebohrung (26) eingreift, die in der kleineren Stirnfläche des kegelstumpfförmigen Endabschnitts (15) der zweiten Komponente (12) geformt ist, wobei die Schraube (24) eine begrenzende axiale Schulter zur axialen Beabstandung der ersten Komponente (11) von der zweiten Komponente (12) bestimmt.

2. Die Kupplung gemäß Anspruch 1, **dadurch gekennzeichnet, dass** das rohrförmige Balgelement (13) an seinen axialen Enden mit der ersten Komponente (11) beziehungsweise mit der zweiten Komponente (12) verschweißt ist.

3. Die Kupplung gemäß einem oder mehreren der obigen Ansprüche, **dadurch gekennzeichnet, dass** die erste Komponente (11), die zweite Komponente (12) und das rohrförmige Balgelement (13) in Abwesenheit ausgeübter Kräfte miteinander koaxial sind.

4. Die Kupplung gemäß einem oder mehreren der obigen Ansprüche, **dadurch gekennzeichnet, dass** die zweite Komponente (12) mit Abdichtmitteln (22) versehen ist, die gegen die Wände des Sitzes (5) des weiblichen Elements (2) drücken können.

5. Die Kupplung gemäß einem oder mehreren der obigen Ansprüche, **dadurch gekennzeichnet, dass** der Sitz (5) einen kegelförmigen Einlass (7) hat.

6. Die Kupplung gemäß Anspruch 4, **dadurch gekennzeichnet, dass** die Abdichtmittel einen O-Ring (22) umfassen, der in einer Ringnut (23) untergebracht ist, die an der äußeren Seitenfläche des Abschnitts der zweiten Komponente (12) bestimmt ist, der sich außerhalb des rohrförmigen Balgelements (13) befindet, und gegen die Seitenwände des im Wesentlichen zylindrischen Sitzes (5) des weiblichen Elements (2) drücken kann.

7. Die Kupplung gemäß einem oder mehreren der obigen Ansprüche, **dadurch gekennzeichnet, dass** der Boden (8) des Sitzes (5) von einem axialen Durchgang (4) für das Fluid durchquert wird, wobei nahe dem Boden des Sitzes (5), entlang dem axialen Durchgang (4), ein Filter (27) bereitgestellt ist.

8. Die Kupplung gemäß einem oder mehreren der obigen Ansprüche, **dadurch gekennzeichnet, dass** die erste Komponente (11) des männlichen Elements (3) und/oder das weibliche Element (2) Gewindeabschnitte (21, 6) haben, die in die Leitungen eingreifen können, welche mit Hilfe der Kupplung (1) miteinander verbunden werden sollen.

## Revendications

1. Raccord rapide, en particulier pour circuits de service fluidiques pour avion, comprenant un élément femelle (2), à relier à un premier conduit d'un circuit fluidique et comportant un siège cylindrique d'extension sensiblement axiale (5) défini à l'intérieur de celui-ci, et un élément mâle (3), à relier à un deuxième conduit d'un circuit fluidique et pouvant s'accoupler avec ledit siège (5) pour relier ledit deuxième conduit au dit premier conduit, ledit élément mâle (3) comprenant un premier composant (11) à relier au dit deuxième conduit et un deuxième composant (12) pouvant être inséré dans ledit siège (5) de l'élément femelle (2), ledit deuxième composant (12) étant articulé avec ledit premier composant (11) pour modifier l'agencement dudit deuxième composant (12) par rapport au dit premier composant (11) de l'élément mâle (3) et adapter ledit agencement à l'agencement dudit siège (5) de l'élément femelle (2),
- ledit deuxième composant (12) étant articulé avec ledit premier composant (11) par un composant intermédiaire déformable (13), interposé entre ledit premier composant (11) et ledit deuxième composant (12), et constitué d'un élément de soufflet tubulaire (13), qui relie ledit premier composant (11) au dit deuxième composant (12) ;
- ledit premier composant (11) comportant une portion d'extrémité (14) de forme tronconique qui est insérée dans une extrémité axiale dudit élément de soufflet tubulaire (13) avec sa face d'extrémité la plus petite dirigée vers ledit deuxième composant (12) ;
- ledit deuxième composant (12) comportant une portion d'extrémité (15) de forme tronconique qui est insérée dans l'autre extrémité axiale dudit élément de soufflet tubulaire (13) avec sa face d'extrémité la plus petite dirigée vers ledit premier composant (11) ;
- lesdites portions d'extrémité de forme tronconique (14, 15) du premier composant (11) et du deuxième composant (12) étant creuses et pourvues de passages (16, 17) sur leurs surfaces latérales pour l'écoulement du fluide ;
- des moyens de limitation de la déformabilité dudit élément de soufflet tubulaire (13) étant prévus, qui comprennent une vis (24) traversant avec jeu un trou (25) défini dans la face d'extrémité la plus petite de ladite portion d'extrémité de forme tronconique (14) du premier composant (11) et étant en prise avec un trou fileté (26) défini dans la face d'extrémité la plus petite de ladite portion d'extrémité de forme tronconique (15) du deuxième composant (12), ladite vis (24) définissant un épaulement axial de délimitation pour espacer axialement ledit premier composant (11) dudit deuxième composant (12).

2. Raccord selon la revendication 1, **caractérisé en ce que** ledit élément de soufflet tubulaire (13) est soudé, à ses extrémités axiales, respectivement au dit premier composant (11) et au dit deuxième composant (12).

3. Raccord selon une ou plusieurs des revendications précédentes, **caractérisé en ce que** ledit premier composant (11), ledit deuxième composant (12) et ledit élément de soufflet tubulaire (13), en l'absence de forces appliquées, sont mutuellement coaxiaux.

4. Raccord selon une ou plusieurs des revendications précédentes, **caractérisé en ce que** ledit deuxième composant (12) est pourvu de moyens d'étanchéité (22) pouvant être mis en prise avec les parois dudit siège (5) de l'élément femelle (2).

5. Raccord selon une ou plusieurs des revendications précédentes, **caractérisé en ce que** ledit siège (5) comporte une entrée conique (7).

6. Raccord selon la revendication 4, **caractérisé en ce que** lesdits moyens d'étanchéité comprennent un joint torique (22) logé dans une rainure annulaire (23) définie sur la surface latérale extérieure de la portion dudit deuxième composant (12) située à l'extérieur dudit élément de soufflet tubulaire (13) et pouvant être mis en prise avec les parois latérales dudit siège sensiblement cylindrique (5) de l'élément femelle (2).

7. Raccord selon une ou plusieurs des revendications précédentes, **caractérisé en ce que** le fond (8) dudit siège (5) est traversé par un passage axial (4) pour le fluide, à proximité du fond dudit siège (5), le long dudit passage axial (4), un filtre (27) étant prévu.

8. Raccord selon une ou plusieurs des revendications précédentes, **caractérisé en ce que** ledit premier composant (11) de l'élément mâle (3) et/ou ledit élément femelle (2) comportent des portions filetées (21, 6) pouvant être mises en prise avec les conduits pour être mutuellement reliés au moyen du raccord (1).
